# EUROPEAN PATENT APPLICATION

(11) **EP 4 265 379 A1**
(43) Date of publication of application: **25.10.2023**
(21) Application number: 23168843.3
(22) Date of filing: 20.04.2023
(51) Int. Cl.: B25J 15/06

(54) **SUCTION HEAD FOR A WASTE SORTING SYSTEM**

(30) Priority: 22.04.2022 NL 2031663
(71) Applicant: Bollegraaf Patents and Brands B.V., 9902 AM Appingedam (NL)
(72) Inventor: Boerhof, Henk, Appingedam (NL); Stolwijk, Wilhelmus Frederik Adrianus, Appingedam (NL)
(74) Representative: Nederlandsch Octrooibureau

(57) **Abstract**

A suction head (1) for a waste sorting system, comprising a main body (2) for connection to a robot manipulator (3), and a resilient and flexible elongated suction cup (4) having a connecting end (5) and an opposing suction end (6). The connecting end (5) being releasably connected to the main body (2) and the suction end (6) is configured for engaging waste items. The main body (2) comprises a main connector (7) connectable to a suction system and the suction head (1) further comprises a suction channel (8) extending through the main connector (7), the main body (2) and the suction cup (4). The suction cup (4) comprises a plurality of corrugations (4a, 4b, 4c, 4d) providing moveability of the suction end (6) with respect to the main body (2) in a lateral X direction, a lateral Y direction, and longitudinal Z direction of the suction cup (4).

## Description

### Field of the invention

The present invention relates to a suction head, in particular a suction head for a waste sorting system, such as a robotic waste sorting system.

### Background art

European patent application EP3674040A1 disclose a suction head for a waste sorting system, wherein the suction head is connectable to a robot manipulator. The suction head comprises a main tubular body having a connecting end for connection to a suction system and a suction end for engagement with a waste item. An upper sleeve member and a lower sleeve member are arranged around the suction end, wherein the upper sleeve member is longitudinally movable with respect to the main tubular body and the lower sleeve member is removable from the suction end. An annular gripper sheet of flexible material is arranged between the upper and lower sleeve member. A biasing member is in longitudinal biasing engagement with the upper sleeve member for biasing the upper sleeve member toward the lower sleeve member clamping the annular gripper sheet between the upper and lower sleeve member.

The prior art suction head described above simplifies assembly and disassembly of the suction head. However, the suction head, and in particular the main tubular body thereof, has limited capability to absorb impact with a waste item as the suction head may move along a conveyor belt covered with various types of waste items and shapes thereof. As a result, a robot manipulator to which the suction head can be attached has to absorb the impact and as such may be damaged.

### Summary of the invention

The present invention seeks to provide an improved suction head for a waste sorting system, particularly a robotic waste sorting system, wherein the suction head provides reliable suction for gripping various types of waste items on a conveyor surface. The suction head of the present invention is further able to absorb impact with a waste item to protect the robot manipulator to which the suction head is attached. The suction head further allows waste items to be vertically lifted from a conveyor surface whilst maintaining the robot manipulator stationary in the vertical direction.

According to the present invention, a suction head of the type mentioned above is provided, wherein the suction head comprises a main body configured for connection to a robot manipulator, and a resilient and flexible elongated suction cup having a connecting end and an opposing suction end, wherein the connecting end is configured for releasable connection to the main body and wherein the suction end is configured to engage a waste item. The main body further comprises a main connector for connection to a suction system and wherein the suction head further comprises a suction channel extending through the main connector, the main body and the suction cup. The suction cup comprises a plurality of corrugations configured to provide moveability of the suction end with respect to the main body in a lateral X direction, a lateral Y direction, and a longitudinal Z direction of the suction cup.

The corrugated suction cup provides high degrees of freedom to the suction end to move with respect to the main body in the lateral X and lateral Y directions as well as the longitudinal Z direction of the suction cup. In particular, the plurality of corrugations provide a high degree of lengthwise compressibility to the suction cup in the longitudinal Z direction thereof so that the suction end is able to freely move toward and away from the main body.

The high degrees of freedom of the suction end to move in the X, Y and Z directions as mentioned allow the suction head to safely move along a stationary or moving conveyor surface loaded with waste items without the risk of damaging the robot manipulator should the suction cup, in particular the suction end, hit a waste item on the conveyor surface. Therefore, impact energy on the suction cup is not transferred to the main body and as a result no impact energy is transferred to the robot manipulator. This in turn ensures that the robot manipulator maintains its accuracy of operation as changes in, e.g., alignment due to energetic impacts are prevented.

In addition to impact robustness of the suction head as provided by the suction cup, the suction head of the present invention is also advantageous for vertically lifting waste items from a conveyor surface without vertically moving the main body of the suction head in the vertical direction. As such the present invention further related to a method for lifting waste items using the suction head, comprising the steps of
lowering the main body of the suction head in a vertical direction with respect to a conveyor surface until the suction end of the suction cup engages a waste item on the conveyor surface;
providing a vacuum at the suction end for grabbing the waste item; and whilst maintaining the main body stationary in the vertical direction;
lifting the waste item in the vertical direction by allowing the suction end to move toward the main body as the suction cup lengthwise compresses by means of the vacuum provided at the suction end.

From the above it is clear that waste items can be lifted safely and accurately from a conveyor surface by maintaining the main body of the suction head stationary with respect to the conveyor surface in the direction of lift, and where a waste item is lifted toward the main body as the suction cup lengthwise compresses by virtue of the vacuum supplied to the suction end holding the waste item.

### Short description of drawings

The present invention will be discussed in more detail below, with reference to the attached drawings, in which
Figure 1 shows a three dimensional view of a suction head connected to a robot manipulator according to an embodiment of the present invention;
Figure 2 shows a cross section of a suction head according to an embodiment of the present invention;
Figure 3 shows a three dimensional view of a suction cup of the suction head according to an embodiment of the present invention.

### Detailed description of embodiments

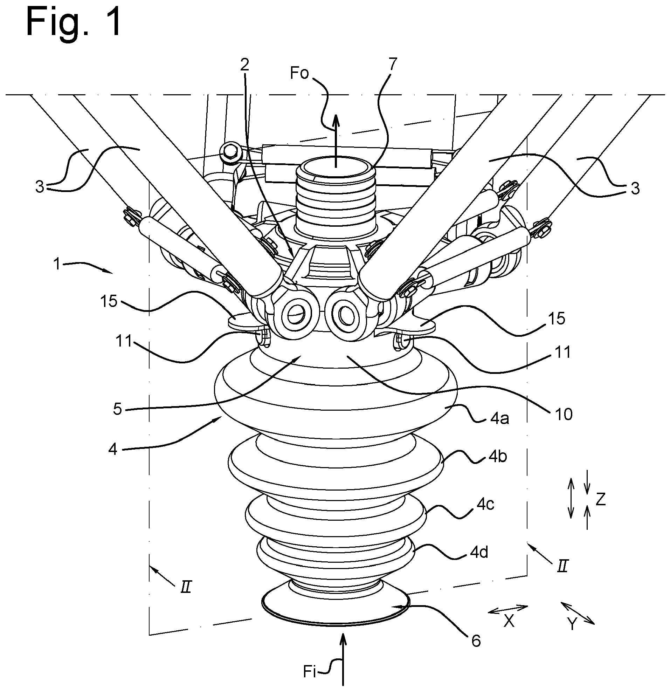

Figure 1 depicts a three dimensional view of a suction head 1 for a robotic waste sorting system. In this exemplary embodiment, the suction head 1 is connected to a robot manipulator 3, e.g. a Delta robot manipulator 3. Note that the robot manipulator 3 can be any robot or pick-and-place unit required for a particular application.

As shown, the suction head 1 comprises a main body 2 configured for connection to a robot manipulator 3, and a resilient and flexible elongated suction cup 4 having a connecting end 5 and an opposing suction end 6. The connecting end 5 is configured for releasable connection to the main body 2 and wherein the suction end 6 is configured to engage a waste item. Therefore, the connecting end 5 of the suction cup 4 is releasably connected to the main body 2 as depicted.

Note that waste items are not shown in the figures but can be envisaged as any kind of object having a substantially flat or curved surface for engagement by the suction end, e.g. pieces of paper or plastics, carbon boxes etc.

The main body 2 further comprises main connector 7 for connection to a suction system, e.g. an external suction system, where in an exemplary embodiment the main connector 7 may be a hose connector which is receivable in a suction hose of the suction system.

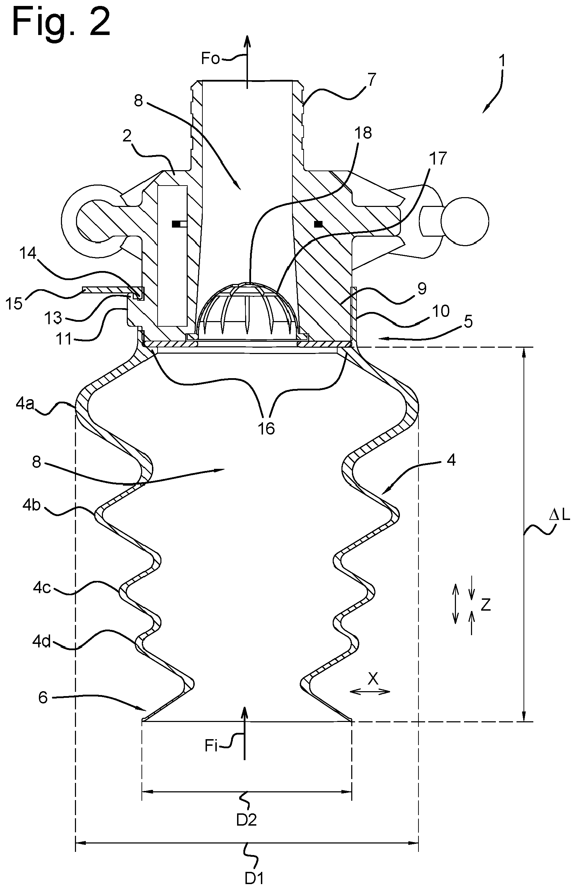

Referring to Figure 2, showing a cross section of a suction head according to an embodiment, the suction head 1 further comprises a suction channel 8 extending through the main connector 7, the main body 2 and the suction cup 4. In Figure 1 and 2 it is shown that, when the suction head 1 is in operation, an air intake flow "Fi" enters the suction end 6 and an air exhaust flow "Fo" exits the main connecter 7 toward the suction system.

The resilient and flexible elongated suction cup 4 comprises a plurality of corrugations 4a, 4b, 4c, 4d configured to provide moveability of the suction end 6 with respect to the main body 2 in a lateral X direction, a lateral Y direction, and in a longitudinal or lengthwise Z direction of the suction cup 4.

The corrugated suction cup 4 provides high degrees of freedom to the suction end 6 to move with respect to the main body 2 in the lateral X and lateral Y directions as well as the longitudinal Z direction of the suction cup 4. In particular, the plurality of corrugations 4a, 4b, 4c, 4d provide a high degree of lengthwise or longitudinal compressibility to the suction cup 4 in the longitudinal Z direction as depicted so that the suction end 6 is able to freely move toward and away from the main body 2.

The high degrees of freedom of the suction end 6 to move in the X, Y and Z directions as mentioned allow the suction head 1 to safely move along a stationary or moving conveyor surface loaded with waste items without the risk of damaging the robot manipulator 3 should the suction cup 4, in particular the suction end 6, hit a waste item on the conveyor surface. Consequently, impact energy on the suction cup 4 is not transferred to the main body 2 and as a result no impact energy is transferred to the robot manipulator 3. This in turn ensures that the robot manipulator 3 maintains its accuracy of operation as changes to robot alignment due to energetic impacts are prevented.

Lengthwise compressibility, i.e. lengthwise contraction and extension, of the suction cup 4 may be further understood by considering that the plurality of corrugations 4a, 4b, 4c, 4d provide the suction cup 4 with a variable longitudinal length ΔL. For example, as shown in Figure 2, let the main body 2 be held stationary, then the suction cup 4 can compress/contract and extend in length ΔL in the longitudinal Z direction as the suction end 6 moves toward or away the main body 2.

It is important to note that the lateral X direction, the lateral Y direction and the longitudinal or lengthwise Z direction as shown are mutually orthogonal, thus effective defining orthogonal X, Y, Z axes. It is also important to consider that the plurality of corrugations 4a, 4b, 4c, 4d allow the suction cup 4 to bend and thus become arched or curved. Such an arched or curved shape of the suction cup 4 is not shown, but the skilled person in the art will understand that the plurality of corrugations 4a, 4b, 4c, 4d of the resilient and flexible elongated suction cup 4 allow for a curved or arched shape when the connecting end 5 is connected to the main body 2 and the suction end 6 moves in e.g. the lateral X and/or lateral Y direction with respect to the main body 2 as depicted in Figure 1 and 2. Therefore, movability of the suction end 6 with respect to the main body 2 in the lateral X and Y directions does not prohibit the capability of the suction end 6 to rotate or pivot to some extent around the X and/or Y axes when the suction end 6 moves in the lateral X and/or lateral Y directions with respect to the main body 2.

Furthermore, the meaning of "lateral" may be understood as "sideways" with respect to the longitudinal Z-direction as depicted in the Figure 1 and 2. For simplicity and without loss of generality, the longitudinal Z-direction may be considered to be a vertical direction and wherein the lateral X and lateral Y directions may be considered to be horizontal directions as suggested in Figure 1 and 2.

From the above it is clear that various advantages are provided by the suction head 1 and in particular the suction cup 4 thereof. For example, the lengthwise compressibility of the suction cup 4 provides mechanical protection in the longitudinal Z direction should the suction end 6 engage a hard or solid object and the robot manipulator 3 lowers the main body 2 further then needed. Such a vertically oriented impact direction would not be transferred to the main body 2 and thus the robot manipulator 3. Also, the plurality of corrugations 4a, 4b, 4c, 4d of the resilient and flexible elongated suction cup 4 allows the suction cup 4 to bend away in case the suction end 6 hits a taller waste item in the lateral X or Y direction.

Another advantage of the suction head 1 is that waste items on a conveyor surface can be gripped by the suction end 6 with less disturbance of surrounding waste items by virtue of the lateral flexibility and longitudinal compressibility of the suction cup 4. This allows a plurality of robot manipulators 3 to be used along a conveyor surface, wherein waste items that or not removed by a preceding robot manipulator 3 maintain their positions as captured by e.g. a vision system.

Yet another advantage of the suction head 1 of the present invention is that the suction end 6 of the flexible suction cup 4 is able to engage and grip irregular and/or angled surfaces of a waste item. That is, as mentioned earlier, the suction end 6 is able to pivot to some extent and as such is can engage angled surfaces of waste items, i.e. non-horizontal surfaces. So, by virtue of the flexibility of the suction cup 4 and thus the suction end 6, allows for improved vacuum based gripping by the suction end 6 even when surfaces of waste items may be irregular or angled or tilted.

In an advantageous embodiment, see Figure 2, an outer diameter D1 of each corrugation of the plurality of corrugations 4a, 4b, 4c, 4d decreases in a direction from the connecting end 5 toward the suction end 6. In this embodiment, the plurality of corrugations 4a, 4b, 4c, 4d are able to fully compress or contract and that a smaller corrugation, see e.g. corrugation 4d, can be received by a wider corrugation, see e.g. 4c, 4b, 4a. As a result, the suction cup 4 has a tapered shape, i.e. tapering from the connecting end 5 toward the suction end 6, that exhibits a larger variable longitudinal length ΔL and as such provides a large range of flexibility in the longitudinal Z direction and thus exhibits improved impact protection and, as will be discussed later, lift capability. It is worth noting that, to avoid clutter of Figure 2, only the outer diameter D1 is explicitly shown for the depicted corrugation 4a.

The tapered shape of the suction cup 4, obtained by decreasing outer diameters D1 of each corrugation 4a, 4b, 4c, 4d in a direction from the connecting end 5 toward the suction end 6, allows for a higher positioned centre of gravity of the suction cup 4, i.e. a centre of gravity closer to the main body 2.This provides for increases stable movement of the suction end 6 when the main body 2 laterally moves in stop-and-go fashion, which is common for e.g. pick-and-place applications. As the centre of gravity is proximal to the main body 2, the suction end 6 exhibits less inertia and as such is able to quickly follow movement of the main body 2, thus allowing faster response times and increase throughput of a waste sorting system.

In an embodiment, the suction end 6 may have an outer diameter D2 which is smaller than each of the outer diameters D1 of each of the plurality of corrugation 4a, 4b, 4c 4d. In another embodiment it is conceivable that the suction end 6 may have an outer diameter D2 which is equal to or larger than a smallest diameter of the outer diameters D1 of each of the plurality of corrugations 4a, 4b, 4c 4d.

As mentioned earlier, the connecting end 5 as depicted is releasable connected to the main body 2. To facilitate quick and easy replacement of the suction cup 4, an embodiment is provided wherein the main body 2 comprises a cup connecting portion 9 and wherein the connecting end 5 of the suction cup 4 comprises a resilient and flexible sleeve portion 10 configured for clamping engagement around the cup connecting portion 9. In this embodiment the sleeve portion 10 is designed such that the suction cup 4 conveniently clamps around the cup connecting portion 9 to quickly mount and dismount the suction cup 4 from the main body 2 of the suction head 1. Since the suction cup 4 may show signs of wear, having the ability to quickly mount a new suction cup 4 to the main body 2 is advantageous to minimize potential downtime of the waste sorting system. Note that the clamped engagement between the connecting end 5 and the cup connecting portion 9 can be configured to provide a required clamping force preventing the sleeve portion 10 from sliding from the cup connecting portion 9.

Note that when a waste item is gripped through suction at the suction end 6, that an under pressure develops in the suction channel 8 and as such the flexible sleeve portion 10 is forced toward the cup connecting portion 9 and as such an airtight seal is achieved between the sleeve portion 10 and the cup connecting portion 9.

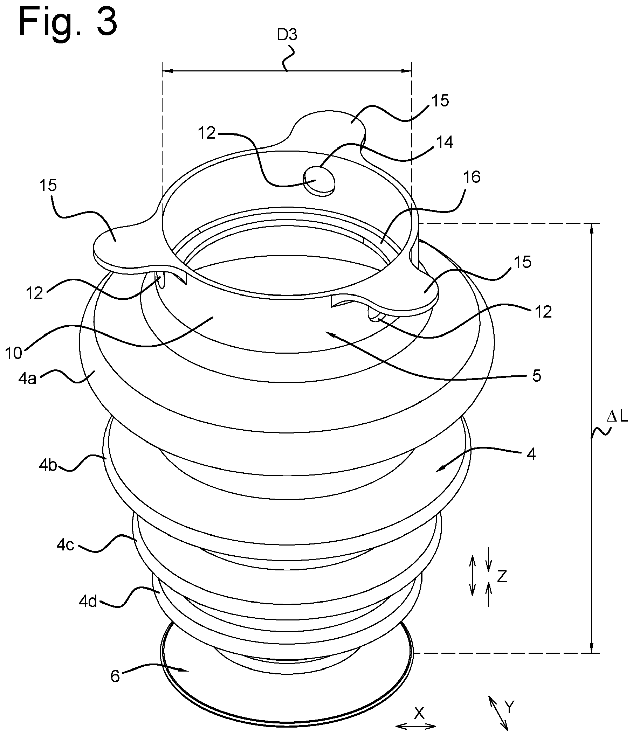

Further referring to Figure 3, showing a three dimensional view of a suction cup 4, the resilient and flexible sleeve portion 10 may be further secured to the cup connecting portion 9. For example, in an embodiment the cup connecting portion 9 comprises a plurality of projections 11, and wherein the sleeve portion 10 comprises a plurality of apertures 12 each of which is arranged to receive a corresponding projection of the plurality of projections 11. In this embodiment, the sleeve portion 10 can be secured in the depicted longitudinal Z direction as any sliding movement of the sleeve portion 10 is blocked by the projections 11 extending through corresponding apertures 12 when the sleeve portion 10 is mounted around the cup connecting portion 9.

In exemplary embodiments, each projection of the plurality of projections 11 may have a round or rectangular shape and wherein each aperture of the plurality of apertures 12 is shaped correspondingly, i.e. having a round or rectangular shape to receive a round or rectangular projection respectively.

From Figure 3 it can be inferred that the sleeve portion 10 may have a particular inner diameter D3 when disconnected from the main body 2. However, since the sleeve portion 10 is flexible and resilient as mentioned above, it is possible to temporarily deform the sleeve portion 10 and/or enlarge the inner diameter D3 for mounting the sleeve portion 10 around the cup connecting portion 9 such that each of the projections 11 can be received through a corresponding aperture 12.

In a further embodiment it is conceivable that each projection of the plurality of projections 11 comprises a hook portion 13 for engagement with a corresponding edge portion 14 of an aperture of the plurality of apertures 12. In this embodiment the hook portion 13 prevents the projections 11 from sliding out of the corresponding apertures 12.

To facilitate mounting the resilient and flexible sleeve portion 10 to the cup connecting portion 9, an embodiment is provided wherein the sleeve portion 10 further comprises one or more projecting tabs 15 configured for manually mounting or removing the sleeve portion 10 around or from the cup connecting portion 9. As shown in Figure 3, the tabs 15 project outward and facilitate manual handling and deformation through outwardly pulling the sleeve portion 10 for fitment around the cup connecting portion 9.

It was mentioned earlier that when the suction head 1 is in operation, an under pressure is present in the suction channel 8 and as such the flexible sleeve portion 10 is forced toward the cup connecting portion 9 and as such an airtight seal is achieved between the sleeve portion 10 and the cup connecting portion 9. To ensure that an air tight seal is achieved, an embodiment is provided, wherein the connecting end 5 of the suction cup 4 comprises an inward protruding circumferential flange 16 for air tight engagement with the main body 2, i.e. the cup connecting portion 9. When an under pressure is present in the suction channel 8, then the circumferential flange 16 facilitates a tight engage with the cup connecting portion and reduces risk of leakage.

To achieve the flexibility and resiliency of the suction cup 4, an embodiment is provided wherein the suction cup 4 is of elastomeric material. In particular, in an advantageous embodiment the suction cup 4 is a unitary piece made of elastomeric material, so that the risk of air leakage is minimized. In further embodiments, the one or more projecting tabs 15 are integrally formed with the sleeve portion 10. Also, the protruding circumferential flange 16 may be integrally formed with the connecting portion 5, i.e. cup connecting portion 9.

Referring to Figure 2, in an embodiment the suction head 1 may be provided with a mesh member 17 arranged in the suction channel 8 for filtering suction air flowing therethrough when the suction head 1 is in use. This embodiment prevents that smaller waste items, but also thin and foldable waste items such as plastic sheets, from being pulled into the suction channel 8 and ultimately into the suction system. The mesh member 17 may be further configured to filter even small particles such as sand and general dust particles, but also small pieces of paper may be captured by the mesh member 17.

Generally, the mesh member 17 may be arranged anywhere in the suction channel 8. For example, in an embodiment (not shown) the mesh member 17 may be arranged in the suction end 6 of the suction cup 4, so that the entire suction channel 8 can remain free from waste items being accidentally drawn into the suction channel 8. However, the mesh member 17 may increase the weight of the suction cup 4 and in particular the suction end 6. That is, the mesh member 17 may increase inertia of the suction end 6 and as such cause sluggish movement and larger lateral excursions of the suction end 6 in response to fast lateral stop-and-go motion of the main body 2. To minimize the weight of the suction cup 4 and particular the suction end 6, an embodiment may be provided as shown in Figure 2, wherein the mesh member 17 is arranged in the main body 2. This embodiment allows the suction cup 4, and the suction end 6 in particular, to maintain a lower weight so that the suction cup 4 can respond to quick stop-and-go motion of the main body 2. Furthermore, this embodiment also ensures that the suction cup 4 remains the most flexible along its variable longitudinal length ΔL.

As further shown in Figure 2, in an embodiment the mesh member 17 is a hemispherical mesh member 17. The hemispherical shape of the mesh member 17 reduces the risk of small waste items clogging the mesh member 17. Furthermore, the hemispherical shape provides a larger filter area and reduces air flow resistance through the mesh member 17.

In Figure 2 it is further shown that the hemispherical mesh member 17 may have an apex 18, wherein the apex 18 is oriented proximally to the main connector 7. In this embodiment the hemispherical mesh member 17 provides a concave filter surface as seen from the suction end 6 in the direction of the air intake flow Fi into the suction cup 4. Alternatively, an embodiment may be provided wherein the apex 18 of the hemispherical mesh member 17 is oriented distally to the main connector 7. So in this embodiment the hemispherical mesh member 17 provides a convex filter surface as seen from the suction end 6 in the direction of the air intake flow Fi into the suction cup 4.

In further embodiments the mesh member 17 may comprise a woven mesh for increased strength and/or flexibility and pliability to act as a flip flop screen.

In addition to impact robustness of the suction head 1 as provided by the suction cup 4, the suction head 1 of the present invention is also advantageous for vertically lifting waste items from a conveyor surface without vertically moving the main body 2 of the suction head 1 in the vertical direction. As mentioned earlier, for simplicity and ease of reference, the longitudinal Z-direction may be considered to be the vertical direction and wherein the lateral X and lateral Y directions may be considered to be horizontal directions as suggested in Figure 1 and 2. Furthermore, the conveyor surface may be considered to be horizontal parallel to the lateral X and Y directions.

In particular, with reference to Figure 1 and 2, a method for lifting waste items using the suction head 1 may be provided, wherein the method comprises the steps of
lowering the main body 2 of the suction head 1 in a vertical direction with respect to a conveyor surface (not shown) until the suction end 6 of the suction cup 4 engages a waste item on the conveyor surface. The method then continues by
providing a vacuum at the suction end 6 for grabbing the waste item; and whilst maintaining the main body 2 stationary in the vertical direction,
lifting the waste item in the vertical direction by allowing the suction end 6 to move toward the main body 2 as the suction cup 4 lengthwise compresses by means of the vacuum provided at the suction end 6.

Therefore, the suction head 1 of the present invention is ideal for lifting waste items safely and accurately from a conveyor surface by maintaining the main body 2 of the suction head 1 stationary with respect to the conveyor surface in the direction of lift, and where a waste item is lifted toward the main body 2 by lengthwise compression of the suction cup 4 under influence of the vacuum supplied to the suction end 6 holding the waste item.

In view of the above, the present invention can now be summarized by the following embodiments:
Embodiment 1. A suction head (1) for a waste sorting system, comprising a main body (2) configured for connection to a robot manipulator (3), and a resilient and flexible elongated suction cup (4) having a connecting end (5) and an opposing suction end (6), wherein the connecting end (5) is configured for releasable connection to the main body (2) and wherein the suction end (6) is configured to engage a waste item;
   wherein the main body (2) comprises a main connector (7) for connection to a suction system and wherein the suction head (1) further comprises a suction channel (8) extending through the main connector (7), the main body (2) and the suction cup (4); and
   wherein the suction cup (4) comprises a plurality of corrugations (4a, 4b, 4c, 4d) configured to provide moveability of the suction end (6) with respect to the main body (2) in a lateral X direction, a lateral Y direction, and in a longitudinal Z direction of the suction cup (4).
Embodiment 2. The suction head according to embodiment 1, wherein an outer diameter (D1) of each corrugation of the plurality of corrugations (4a, 4b, 4c, 4d) decreases in a direction from the connecting end (5) toward the suction end (6).
Embodiment 3. The suction head according to embodiment 1 or 2, wherein the main body (2) comprises a cup
   connecting portion (9) and wherein the connecting end (5) of the suction cup (4) comprises a resilient and flexible sleeve portion (10) configured for clamping engagement around the cup connecting portion (9).
Embodiment 4. The suction head according to embodiment 3, wherein the cup connecting portion (9) comprises a plurality of projections (11), and wherein the sleeve portion (10) comprises a plurality of apertures (12) each of which is arranged to receive a corresponding projection of the plurality of projections (11).
Embodiment 5. The suction head according to embodiment 4, wherein each projection of the plurality of projections (11) comprises a hook portion (13) for engagement with a corresponding edge portion (14) of an aperture of the plurality of apertures (12).
Embodiment 6. The suction head according to any one of embodiments 3-5, wherein the sleeve portion (10) further comprises one or more projecting tabs (15) configured for manually mounting or removing the sleeve portion (10) from the cup connecting portion (9).
Embodiment 7. The suction head according to any one of embodiments 3-6, wherein the connecting end (5) of the suction cup (4) comprises an inward protruding circumferential flange (16) for airtight engagement with the cup connecting portion (9).
Embodiment 8. The suction head according to any one of embodiments 1-7, further comprising a mesh member (17) arranged in the suction channel (8) for filtering suction air flowing therethrough when the suction head (1) is in use.
Embodiment 9. The suction head according to embodiment 8, wherein the mesh member (17) is arranged in the main body (2).
Embodiment 10. The suction head according to embodiment 8, wherein the mesh member (17) is arranged in the suction end (6) of the suction cup (4).
Embodiment 11. The suction head according to any one of embodiments 8-10, wherein the mesh member (17) is a hemispherical mesh member (17).
Embodiment 12. The suction head according to embodiment 11, wherein an apex (18) of the hemispherical mesh member (17) is oriented proximally to the main connector (7).
Embodiment 13. The suction head according to embodiment 11, wherein an apex (18) of the hemispherical mesh member (17) is oriented distally to the main connector (7).
Embodiment 14. The suction head according to any one of embodiments 1-13, wherein the suction cup (4) is a unitary piece made of elastomeric material.
Embodiment 15. A method for lifting waste items using the suction head (1) according to any one of embodiments 1-14, comprising the steps of:
   lowering the main body (2) of the suction head (1) in a vertical direction with respect to a conveyor surface until the suction end (6) of the suction cup (4) engages a waste item on the conveyor surface;
   providing a vacuum at the suction end (6) for grabbing the waste item; and whilst maintaining the main body (2) stationary in the vertical direction,
   lifting the waste item in the vertical direction by allowing the suction end (6) to move toward the main body (2) as the suction cup (4) lengthwise compresses by means of the vacuum provided at the suction end (6).

The present invention has been described above with reference to a number of exemplary embodiments as shown in the drawings. Modifications and alternative implementations of some parts or elements are possible, and are included in the scope of protection as defined in the appended claims.

## Claims

1. A suction head (1) for a waste sorting system, comprising a main body (2) configured for connection to a robot manipulator (3), and a resilient and flexible elongated suction cup (4) having a connecting end (5) and an opposing suction end (6), wherein the connecting end (5) is configured for releasable connection to the main body (2) and wherein the suction end (6) is configured to engage a waste item;
wherein the main body (2) comprises a main connector (7) for connection to a suction system and wherein the suction head (1) further comprises a suction channel (8) extending through the main connector (7), the main body (2) and the suction cup (4); and
wherein the suction cup (4) comprises a plurality of corrugations (4a, 4b, 4c, 4d) configured to provide moveability of the suction end (6) with respect to the main body (2) in a lateral X direction, a lateral Y direction, and in a longitudinal Z direction of the suction cup (4).

2. The suction head according to claim 1, wherein an outer diameter (D1) of each corrugation of the plurality of corrugations (4a, 4b, 4c, 4d) decreases in a direction from the connecting end (5) toward the suction end (6).

3. The suction head according to claims 1 or 2, wherein the main body (2) comprises a cup connecting portion (9) and wherein the connecting end (5) of the suction cup (4) comprises a resilient and flexible sleeve portion (10) configured for clamping engagement around the cup connecting portion (9).

4. The suction head according to claim 3, wherein the cup connecting portion (9) comprises a plurality of projections (11), and wherein the sleeve portion (10) comprises a plurality of apertures (12) each of which is arranged to receive a corresponding projection of the plurality of projections (11).

5. The suction head according to claim 4, wherein each projection of the plurality of projections (11) comprises a hook portion (13) for engagement with a corresponding edge portion (14) of an aperture of the plurality of apertures (12).

6. The suction head according to any one of claims 3-5, wherein the sleeve portion (10) further comprises one or more projecting tabs (15) configured for manually mounting or removing the sleeve portion (10) from the cup connecting portion (9).

7. The suction head according to any one of claims 3-6, wherein the connecting end (5) of the suction cup (4) comprises an inward protruding circumferential flange (16) for air tight engagement with the cup connecting portion (9).

8. The suction head according to any one of claims 1-7, further comprising a mesh member (17) arranged in the suction channel (8) for filtering suction air flowing therethrough when the suction head (1) is in use.

9. The suction head according to claim 8, wherein the mesh member (17) is arranged in the main body (2).

10. The suction head according to claim 8, wherein the mesh member (17) is arranged in the suction end (6) of the suction cup (4).

11. The suction head according to any one of claims 8-10, wherein the mesh member (17) is a hemispherical mesh member (17).

12. The suction head according to claim 11, wherein an apex (18) of the hemispherical mesh member (17) is oriented proximally to the main connector (7).

13. The suction head according to claim 11, wherein an apex (18) of the hemispherical mesh member (17) is oriented distally to the main connector (7).

14. The suction head according to any one of claims 1-13, wherein the suction cup (4) is a unitary piece made of elastomeric material.

15. A method for lifting waste items using the suction head (1) according to any one of claims 1-14, comprising the steps of:
lowering the main body (2) of the suction head (1) in a vertical direction with respect to a conveyor surface until the suction end (6) of the suction cup (4) engages a waste item on the conveyor surface;
providing a vacuum at the suction end (6) for grabbing the waste item; and whilst maintaining the main body (2) stationary in the vertical direction,
lifting the waste item in the vertical direction by allowing the suction end (6) to move toward the main body (2) as the suction cup (4) lengthwise compresses by means of the vacuum provided at the suction end (6).
